# EUROPEAN PATENT SPECIFICATION

(11) **EP 0 880 890 B1**
(45) Date of publication and mention of the grant of the patent: **21.08.2002**
(21) Application number: 98201665.1
(22) Date of filing: 19.05.1998
(51) Int. Cl.: A01K 5/00, A01F 29/00, A01F 25/20

(54) **A method and device for mixing fodder**
Verfahren und Vorrichtung um Futter zu mischen
Méthode et dispositif pour mélanger du fourage

(30) Priority: 30.05.1997 NL 1006170
(43) Date of publication of application: 02.12.1998
(60) Divisional application: 99201585.9
(73) Proprietor: Trioliet Mullos B.V., 7570 AC Oldenzaal (NL)
(72) Inventor: van der Plas, Nicolaas, 7576 WB Oldenzaal (NL)
(74) Representative: de Vries, Johannes Hendrik Fokke

(56) References cited:
- FR-A- 2 442 656
- US-A- 1 811 719
- US-A- 5 429 436

## Description

The invention relates to a device for mixing and/or loosening fodder, which device is provided with a mixing chamber and with at least one mixing unit which is capable of movement within said mixing chamber, whereby said mixing unit is driven by a driving shaft via a shiftable speed reduction gear so that the speed of motion of the mixing unit can be changed during mixing,

US-A-5429436 discloses such device, whereby the speed reduction gear can be shifted in a lower gear ratio and a higher gear ratio, so that two different operations can be performed, a cutting operation or a mixing operation. So, the reduction gear has to be shifted into the correct gear ratio to perform the desired operation.

When fodder is being mixed, various materials are usually introduced into the mixing chamber, whereby it frequently happens that large chunks of material must be loosened in the mixing chamber in order to be able to mix them with other materials. Said loosening of large chunks of material requires a great deal more energy than the mixing of materials which consist of small parts, however, and this difference in energy stands in the way of a smooth progress of the mixing process.

The object of the invention is to provide a method and a device wherein the required drive power of the mixing unit can be temporarily reduced, in particular during the initial stage of the mixing process, when large chunks of material are present.

According to the invention the shiftable speed reduction gear comprises three rotatable units, whose teeth are in mesh with each other, wherein the driving shaft drives the first unit and the mixing unit is connected to the second unit, and wherein an engaging mechanism comprising a hydraulic motor is present, which is capable of keeping the third unit stationary so as to effect a first transmission ratio, and which is capable of causing the third unit to rotate in order to effect another transmission ratio. Thereby the rotational speed of the mixing unit can be infinitely varied between standstil and a specified maximum speed.

The engaging mechanism may comprise a self-braking unit, which is capable of blocking the rotation of the third unit, which locking engagement can be released in a controlled manner by driving the hydraulic motor. Such a self-braking unit is known per se, for example in the form of engaging worm wheels, wherein one worm wheel is in self-braking contact with the other worm wheel, wherein the former worm wheel can be rotated when the other worm wheel is being driven (see for example the Dutch magazine "Aandrijftechniek" 4, April 1998).

Preferably the speed reduction gear comprises a planetary gear assembly consisting of a sun gear, a planetary gear and a planetary carrier comprising planet gears. In one preferred embodiment the first unit is the planetary carrier, the second unit is the planetary gear, whilst the engaging mechanism comprises a first clutch, which is capable of connecting the sun gear with the planetary carrier, and a second clutch, which is capable of keeping the sun gear stationary. In this way it is possible to change over to a quicker or a slower movement of the mixing unit during mixing. This will be explained in more detail with reference to a drawing.

In particular when the engaging mechanism comprises a self-braking unit, the first unit may be the sun gear, the second unit may be the planetary carrier and the engaging mechanism may drive the planetary gear.

The invention furthermore relates to a method for mixing and/or loosening fodder in a mixing chamber comprising at least one mixing unit which moves within said mixing chamber, whereby said mixing unit is driven by a driving shaft via a shiftable speed reduction gear by which the speed of motion of the mixing unit is changed during mixing, whereby the shiftable speed reduction gear comprises three rotatable units, whose teeth are in mesh with each other, wherein the driving shaft drives the first unit and the mixing unit is connected to the second unit, and wherein an engaging mechanism comprising a hydraulic motor keeps the third unit stationary so as to effect a first transmission ratio, or causes the third unit to rotate in order to effect another transmission ratio.

Further aspects of the invention are disclosed in the description of the figures and/or defined in the claims. Said aspects may be used separately as well as in combination with each other.

The invention will be explained in more detail hereafter with reference to the drawing, which shows a few embodiments of devices for mixing fodder.
Figures 1 - 4 show an embodiment of a device for mixing fodder;
Figure 5 shows a planetary gear assembly;
Figure 6 shows a speed reduction gear comprising a planetary gear assembly;
Figures 7 - 9 show another example of a speed reduction gear;

The figures are merely diagrammatic illustrations, wherein corresponding parts are indicated by the same numerals.

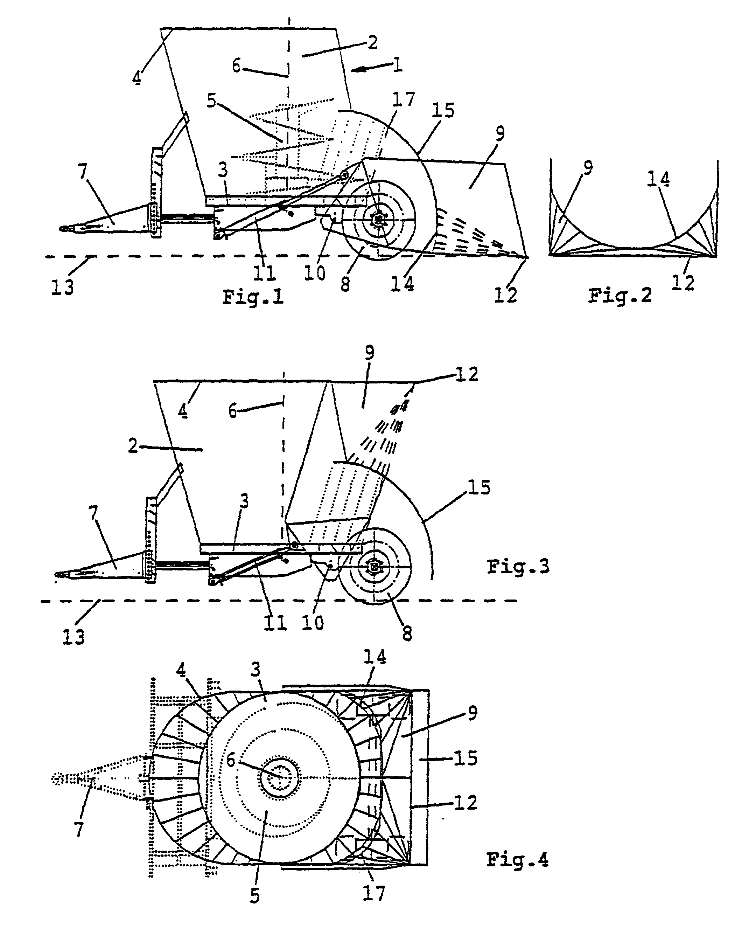

Figure 1 shows a device for mixing fodder in side view. The device comprises a mixing chamber 1 with a side wall 2, which is curved to have an approximately circular shape, seen in plan view, and which diverges in upward direction. The diameter of the mixing chamber near bottom 3 is smaller than near upper edge 4, therefore.

A mixing unit 5, illustrated in dotted lines, is present in the mixing chamber, which mixing unit is capable of rotation about a substantially vertical axis 6. The mixing unit comprises a spirally formed mixing paddle.

The device furthermore comprises means 7 for hitching the device to a tractor, which means 7 may be of a construction which is known per se. The device furthermore comprises two wheels 8, so that the device can be drawn when it is hitched to a tractor.

The device is provided with a loading unit 9, which is capable of pivoting movement about a pin 10 positioned near the bottom 3 of mixing chamber 1, which loading unit functions to fill mixing chamber 1 with material to be mixed. The pivoting of loading unit 9 is controlled by means of hydraulic cylinder 11. Figure 1 shows loading unit 9 to have pivoted downwards, so that a straight edge 12 has been positioned near floor 13, so that the material to be mixed can easily be placed on loading unit 9.

Figure 2 shows loading unit 9 in rear view, wherein the curved edge 14 can be distinguished, which curved edge moves along a guide plate 15 upon pivoting of loading unit 9.

When material has been moved onto loading unit 9 and said loading unit 9 is pivoted upwards about pivot pin 10, the material will fall into mixing chamber 1 upon reaching opening 16 in wall 2 of the mixing chamber, which opening 16 has a curved lower edge 17, which edge joins guide plate 15. Seen in plan view, said lower edge 17 is curved, as is shown in Figure 4.

In the situation which is shown in Figure 3, the loading unit 9 has been moved to its highest position, in which it joins the curved side wall 2 of the mixing chamber. Since side wall 2 and loading unit are both curved, with said curves being contiguous to each other, the mixing chamber does not comprise any so-called lost spaces, in which material can accumulate and in which the mixing intensity is lower than in the other parts of the mixing chamber. The curved shape of loading unit 9 is indicated in dashed lines in Figures 1 and 3.

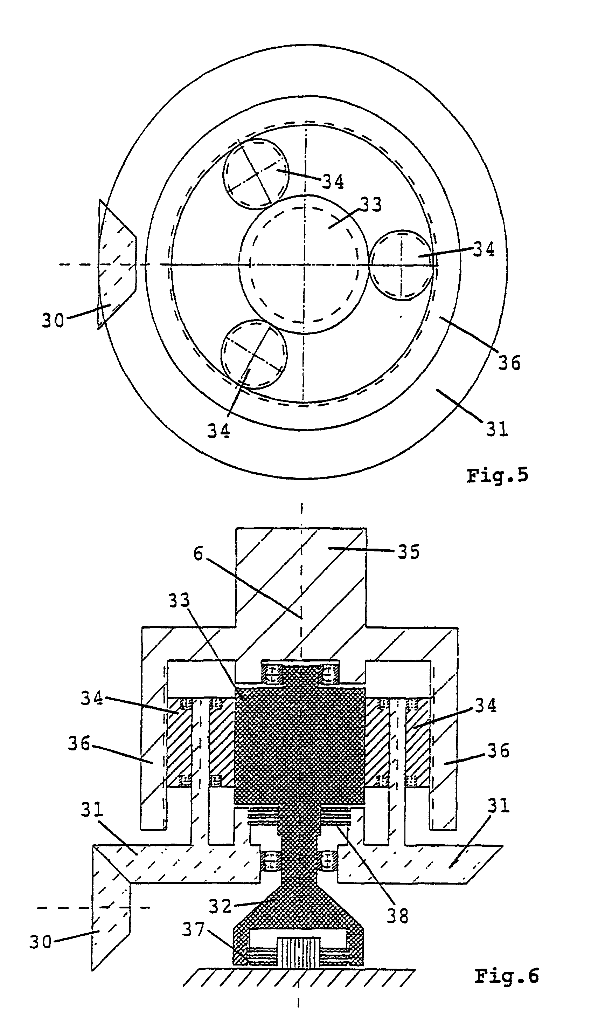

Figures 5 and 6 show an embodiment of the driving mechanism of a mixing unit, preferably a mixing unit which rotates about a vertical axis 6, wherein the mixing unit is driven by means of the power take-off shaft of a tractor, which is connected to a conical gear 30, which is capable of rotation in a vertical plane. Gear 30 drives a (likewise conical) gear 31, which can rotate co-axially with vertical axis 6. Gear 31 is supported in bearings on base member 32, which is integral with a gear 33, which forms the sun gear of a planetary gear assembly, whose planet gears 34 are rotatably connected to gear 31. The planet gears 34 are driven by means of conical gear 30, therefore.

The mixing unit (not shown), which rotates about vertical axis 6, is driven by means of shaft 35, to which shaft 35 the planetary gear 36 of the planetary gear assembly is connected.

From Figure 6 it will be apparent, that the illustrated gear assembly functions as a two-stage reduction unit, wherein outgoing shaft 35 has a high speed when base member 32 is kept stationary by means of clutch 37, and wherein outgoing shaft 35 has a lower speed in the same direction when gear 31, which forms the planetary carrier, is connected to base member 32 by means of clutch 38. In the latter case, the rotational speed of outgoing shaft 35 will be equal to the rotational speed of gear 31.

By using the above-described planetary gear assembly, a compact and reliable two-stage reduction unit can be constructed, which can be mounted under a mixing unit which rotates about a vertical axis, and which is capable of changing over during operation.

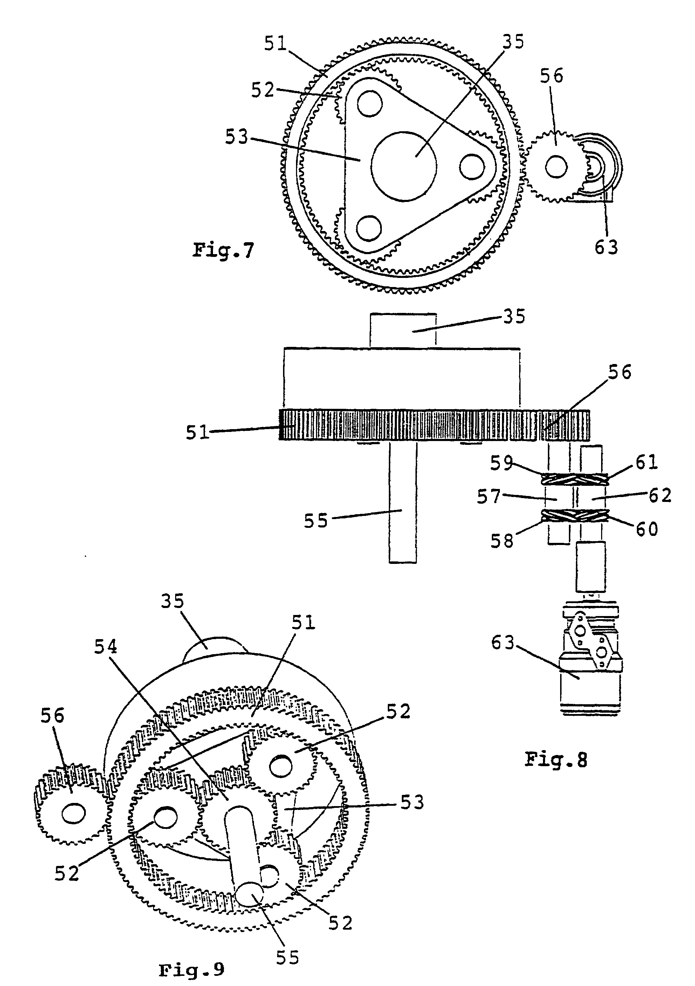

Figures 7 - 9 show another embodiment of a driving mechanism comprising a planetary gear assembly. Figure 7 is a plan view, Figure 8 is a side view, and Figure 9 is a perspective bottom view of said embodiment. The planetary gear assembly comprises a planetary gear 51 fitted with internal teeth as well as with external teeth. Said internal teeth are in mesh with planet gears 52, which are rotatably mounted in planetary carrier 53, which is attached to outgoing shaft 35, which drives a mixing unit. Sun gear 54 of the planetary gear assembly is driven via shaft 55, for example by means of the power take-off shaft of a tractor. Gear 56, which is in engagement with the external teeth of planetary gear 51, can keep said planetary gear 51 stationary or cause it to rotate. Shaft 57 of gear 56 is to that end provided with two opposed worm wheels 58, 59, which are in mesh with two worm wheels 60, 61, which are mounted on shaft 62, which shaft 62 is the outgoing shaft of a hydraulic motor 63.

When motor 63 is not being driven, gear 56 cannot rotate, because the two enmeshed pairs of worm wheels 58, 60 and 59, 61 each form a self-braking transmission gear. In that case, rotation of shaft 55 will cause outgoing shaft 35 to rotate in the same direction at a specified lower speed. When motor 63 thereby rotates shaft 62 at a specified speed, shaft 57 can rotate at the same speed, because gear 56 is driven by planetary gear 51. The result of this is that outgoing shaft 35 is caused to rotate at lower speed. In this way the rotational speed of outgoing shaft 35 can be infinitely varied between a specified maximum speed, which is a specified fraction of the rotational speed of shaft 55, and standstill.

A minimum amount of hydraulic energy is required for driving motor 63, which driving can take place in a controlled manner by means of fluid supply from the hydraulic system of a tractor.

## Claims

1. A device for mixing and/or loosening fodder, which device is provided with a mixing chamber (1) and with at least one mixing unit (5) which is capable of movement within said mixing chamber (1), whereby said mixing unit (5) is driven by a driving shaft (55) via a shiftable speed reduction gear so that the speed of motion of the mixing unit (5) can be changed during mixing, **characterized in that** the shiftable speed reduction gear comprises three rotatable units, whose teeth are in mesh with each other, wherein the driving shaft (55) drives the first unit (54) and the mixing unit (5) is connected to the second unit (53), and wherein an engaging mechanism (57-63) comprising a hydraulic motor (63) is present, which is capable of keeping the third unit (51) stationary so as to effect a first transmission ratio, and which is capable of causing the third unit (51) to rotate in order to effect another transmission ratio.

2. A device according to claim 1, **characterized in that** said mixing unit (5) is rotatable about a substantially vertical axis (6).

3. A device according to claim 1 or 2, **characterized in that** said engaging mechanism (56-63) comprises a self-braking unit (58,59,60,61), which is capable of blocking the rotation of the third unit (51), which locking engagement can be released in a controlled manner by driving the hydraulic motor (63).

4. A device according to any one of the preceding claims, **characterized in that** said speed reduction gear comprises a planetary gear assembly consisting of a sun gear (54), a planetary gear (51) and a planetary carrier (53) comprising planet gears (34,52).

5. A device according to claim 4, **characterized in that** the first (31) unit is the planetary carrier, the second unit is the planetary gear (36), whilst the engaging mechanism comprises a first clutch (38), which is capable of connecting the sun gear (33) with the planetary carrier (31), and a second clutch (37), which is capable of keeping the sun gear (33) stationary.

6. A device according to claim 4, **characterized in that** the first unit is the sun gear (54), the second unit is the planetary carrier (53) and the engaging mechanism (56-63) drives the planetary gear (51).

7. A device according to any one of the preceding claims, **characterized in that** a rotatable mixing unit (5) can be driven via a coaxially mounted planetary gear assembly, which can be driven via a driving shaft (30) which extends perpendicularly to the axis (6) of rotation of the mixing unit (5).

8. A method for mixing and/or loosening fodder in a mixing chamber (1) comprising at least one mixing unit (5) which moves within said mixing chamber (1), whereby said mixing unit (5) is driven by a driving shaft (55) via a shiftable speed reduction gear by which the speed of motion of the mixing unit (5) is changed during mixing, **characterized in that** the shiftable speed reduction gear comprises three rotatable units, whose teeth are in mesh with each other, wherein the driving shaft (55) drives the first unit (54) and the mixing unit (5) is connected to the second unit (53), and wherein an engaging mechanism (57-63) comprising a hydraulic motor (63) keeps the third unit (51) stationary so as to effect a first transmission ratio, or causes the third unit (51) to rotate in order to effect another transmission ratio.

## Patentansprüche

1. Gerät zum Mischen und/oder Lockern von Futter, welches Gerät mit einer Mischkammer (1) und wenigstens einer Mischeinheit (5) versehen ist, die zur Bewegung innerhalb der Mischkammer (1) in der Lage ist, wobei die Mischeinheit (5) durch eine Antriebswelle (55) über ein verstellbares Geschwindigkeits-Reduktionsgetriebe angetrieben ist, so daß die Geschwindigkeit der Bewegung der Mischeinheit (5) während des Mischens geändert werden kann, **dadurch gekennzeichnet, daß** das verstellbare Geschwindigkeits-Reduktionsgetriebe drei drehbare Einheiten umfaßt, deren Zähne miteinander kämmen, wobei die Antriebswelle (55) die erste Einheit (54) antreibt und die Mischeinheit mit der zweiten Einheit (53) verbunden ist und wobei ein einen hydraulischen Motor (63) umfassender Eingriffsmechanismus (57 - 63) vorhanden ist, der in der Lage ist, die dritte Einheit (51) stationär zu halten, um ein erstes Übersetzungsverhältnis zu bewirken und der in der Lage ist, die Drehung der dritten Einheit (51) zu veranlassen, um ein anderes Übersetzungsverhältnis zu bewirken.

2. Gerät nach Anspruch 1, **dadurch gekennzeichnet, daß** die Mischeinheit (5) um eine im wesentlichen vertikale Achse (6) drehbar ist.

3. Gerät nach Anspruch 1 oder 2, **dadurch gekennzeichnet, daß** der Eingriffsmechanismus (56 - 63) eine selbstbremsende Einheit (58, 59, 60, 61) umfaßt, welche in der Lage ist die Drehung der dritten Einheit (51) zu blockieren, welcher Verriegelungseingriff in einer gesteuerten Weise durch Antrieb des hydraulischen Motors (63) gelöst werden kann.

4. Gerät nach irgendeinem der vorhergehenden Ansprüche, **dadurch gekennzeichnet, daß** das Geschwindigkeits-Reduktionsgetriebe eine Planetengetriebeanordnung umfaßt, die aus einem Sonnenrad (54), einem Planetenrad (51) und einem Planetenträger (53), der Planeten-Zahnräder (34, 52) umfaßt, besteht.

5. Gerät nach Anspruch 4, **dadurch gekennzeichnet, daß** die erste (31) Einheit der Planetenträger ist, die zweite Einheit das Planeten-Zahnrad (36) ist, während der Eingriffsmechanismus eine erste Kupplung (38) umfaßt, die in der Lage ist, das Sonnenrad (33) mit dem Planetenträger (31) zu verbinden, und eine zweite Kupplung (37) umfaßt, die in der Lage ist, das Sonnenrad (33) stationär zu halten.

6. Gerät nach Anspruch 4, **dadurch gekennzeichnet, daß** die erste Einheit das Sonnenrad (54) ist, die zweite Einheit der Planetenträger (53) ist und der Eingriffsmechanismus (56 - 63) das Planetenrad (51) antreibt.

7. Gerät nach irgendeinem der vorhergehenden Ansprüche, **dadurch gekennzeichnet, daß** eine drehbare Mischeinheit (5) über eine koaxial angeordnete Planeten-Getriebeanordnung angetrieben werden.kann, die über eine Antriebswelle (30) angetrieben werden kann, die sich senkrecht zu der Drehachse (6) der Mischeinheit (5) erstreckt.

8. Verfahren zum Mischen und/oder Lockern von Futter in einer Mischkammer (1), die wenigstens eine Mischeinheit (5) umfaßt, welche sich innerhalb der Mischkammer (1) bewegt, wobei die Mischeinheit (5) durch eine Antriebswelle (55) über ein verstellbares Geschwindigkeits-Reduktionsgetriebe angetrieben ist, durch welches die Bewegungsgeschwindigkeit der Mischeinheit (5) während des Mischens verändert wird, **dadurch gekennzeichnet, daß** das verstellbare Geschwindigkeits-Reduktionsgetriebe drei drehbare Einheiten umfaßt, deren Zähne miteinander kämmen, wobei die Antriebswelle (55) die erste Einheit (54) antreibt und die Mischeinheit (5) mit der zweiten Einheit (53) verbunden ist und wobei ein einen hydraulischen Motor (63) umfassender Eingriffsmechanismus (57 - 63) die dritte Einheit (51) stationär hält, um ein erstes Übersetzungsverhältnis zu bewirken oder die dritte Einheit (51) zum Drehen veranlaßt, um ein anderes Übersetzungsverhältnis zu bewirken.

## Revendications

1. Dispositif pour mélanger et/ou délier du fourrage, lequel dispositif est pourvu d'une chambre de mélange (1) et d'au moins une unité de mélange (5) qui est apte à se déplacer au sein de la dite chambre de mélange (1), au moyen duquel la dite unité de mélange (5) est entraînée par un arbre d'entraînement (55) par l'intermédiaire d'un train réducteur de vitesse ripable de telle sorte que la vitesse de mouvement de l'unité de mélange (5) peut être modifiée au cours du mélange, **caractérisé en ce que** le train réducteur de vitesse ripable comprend trois unités pouvant tourner, dont les dents s'engrènent les unes avec les autres, dans lequel l'arbre d'entraînement (55) entraîne la première unité (54) et l'unité de mélange (5) est raccordée à la seconde unité (53), et dans lequel un mécanisme d'engagement (57-63) comprenant un moteur hydraulique (63) est présent, qui est apte à maintenir fixe la troisième unité (51) de façon à réaliser un premier rapport de transmission, et qui est apte à amener la troisième unité (51) à tourner de façon à réaliser un autre rapport de transmission.

2. Dispositif selon la revendication 1, **caractérisé en ce que** la dite unité de mélange (5) peut tourner autour d'un axe sensiblement vertical (6).

3. Dispositif selon la revendication 1 ou 2, **caractérisé en ce que** le dit mécanisme d'engagement (56-63) comprend une unité auto-freinante (58, 59, 60, 61), qui est apte à bloquer la rotation de la troisième unité (51), lequel engagement par blocage peut être libéré de façon commandée en pilotant le moteur hydraulique (63).

4. Dispositif selon l'une quelconque des revendications précédentes, **caractérisé en ce que** le dit train réducteur de vitesse comprend un ensemble d'engrenages planétaires constitué d'une roue solaire (54), d'un engrenage planétaire (51) et d'un porte-pignons satellites (53) comprenant des engrenages épicycloïdaux (34, 52).

5. Dispositif selon la revendication 4, **caractérisé en ce que** la première unité (31) est le porte-pignons satellites, la seconde unité est l'engrenage planétaire (36), tandis que le mécanisme d'engagement comprend un premier embrayage (38), qui est apte à raccorder la roue solaire (33) au porte-pignons satellites (31), et un second embrayage (37), qui est apte à maintenir fixe la roue solaire (33).

6. Dispositif selon la revendication 4, **caractérisé en ce que** la première unité est la roue solaire (54), la seconde unité, est le porte-pignons satellites (53) et le mécanisme d'engagement (56-63) entraîne l'engrenage planétaire (51).

7. Dispositif selon l'une quelconque des revendications précédentes, **caractérisé en ce qu'**une unité de mélange (5) pouvant tourner peut être entraînée par l'intermédiaire d'un ensemble d'engrenages planétaires montés coaxialement, dont l'entraînement peut s'effectuer par l'intermédiaire d'un arbre d'entraînement (30) qui s'étend perpendiculairement à l'axe (6) de rotation de l'unité de mélange (5).

8. Procédé pour mélanger et/ou délier du fourrage dans une chambre de mélange (1) comprenant au moins une unité de mélange (5) qui se déplace au sein de la dite chambre de mélange (1), au moyen duquel la dite unité de mélange (5) est entraînée par un arbre d'entraînement (55) par l'intermédiaire d'un train réducteur de vitesse ripable grâce auquel la vitesse de mouvement de l'unité de mélange (5) est modifiée au cours du mélange, **caractérisé en ce que** le train réducteur de vitesse ripable comprend trois unités pouvant tourner, dont les dents s'engrènent les unes avec les autres, dans lequel l'arbre d'entraînement (55) entraîne la première unité (54) et l'unité de mélange (5) est connectée à la seconde unité (53), et dans lequel un mécanisme d'engagement (57-63) comprenant un moteur hydraulique (63) maintient fixe la troisième unité (51) de façon à réaliser un premier rapport de transmission, ou amène la troisième unité (51) à tourner de façon à réaliser un autre rapport de transmission.
